# EUROPEAN PATENT SPECIFICATION

(11) **EP 3 204 562 B1**
(45) Date of publication and mention of the grant of the patent: **12.12.2018**
(21) Application number: 15818085.1
(22) Date of filing: 05.10.2015
(51) Int. Cl.: E03F 7/00, G01F 23/16

(54) **ASSEMBLY OF A SEWER AND A SEWER BLOCKAGE DETECTION SYSTEM**
ANORDNUNG EINES ABWASSERKANALS UND SYSTEM ZUR ERKENNUNG EINER ABWASSERKANALBLOCKIERUNG
ENSEMBLE CONSTITUÉ D'UN ÉGOUT ET D'UN SYSTÈME DE DÉTECTION D'OBTURATION D'ÉGOUT

(30) Priority: 06.10.2014 NL 2013577
(43) Date of publication of application: 16.08.2017
(73) Proprietor: Holding Stamhuis B.V., 3542 AX Utrecht (NL)
(72) Inventor: STAMHUIS, Hendrik, 1231 LJ Loosdrecht (NL)
(74) Representative: EP&C
(86) International application number: PCT/NL2015/050695
(87) International publication number: WO 2016/056900

(56) References cited:
- GB-A- 2 423 365
- JP-A- S60 250 215
- US-A- 3 638 490
- US-A- 3 965 740

## Description

The invention relates to an assembly of a sewer and a sewer blockage detection system.

It sometimes occurs that a sewer gets blocked, for example because of increasing amounts of sediments getting deposited and adhered to inner walls of sewer pipes. Such blockages also can be caused by users which accidentally or purposively drop strange objects in lavatory bowls and then try to flush them. A blocking of the sewer may lead to all kinds of undesired situations, like a flooding of waste-water and pieces of excrements out of the toilet into the surroundings. At public sites like in stores and warehouses, this may have a very negative effect on business. Besides that it takes a lot of time to clean it all up again and have the sewer unblocked. Therefore various kinds of sewer blockage detection systems have been developed which are already known in a wide variety of embodiments.

For example US 4,546,346 shows a sewer blockage detection device which can be screwed onto a threaded clean out access opening of a sewer pipe. The detection device comprises a pneumatic switch that is designed to get activated by a flexible diaphragm when a waste-water level inside the sewer pipe rises above a set critical threshold level. In the event of a blockage of the sewer pipe, the blocked material exerts pressure on the flexible diaphragm which then closes the pneumatic switch and thereby sets off an alarm either locally or at a remote location.

Another example is US 1,164,882 where a rod of electrically conductive material extends into a chamber part of a sewer pipe. As soon as the sewage rises sufficiently within the chamber, the waste-water causes the lower contact ends of the rod to submerge. This closes an electric circuit, since the waste-water acts as conducting medium, and an electric bell may be sounded or another alarm signal may be given that the sewer pipe has become clogged.

GB 2 423 365 discloses the features of the preamble of claim 1 and in particular shows an embodiment in which a detection unit has been arranged within a drainage. The detection device comprises a magnetic float and a switch. The magnetic float is arranged to ride up and down a support member, whereas the switch is located inside the upper end of this support member. The magnetic float rises with the level of the fluid and, when it reaches a predetermined level, triggers the switch and activates a warning signal.

A disadvantage with each of those known sewer blockage detection systems is that they are relative expensive and/or are difficult to install and/or are vulnerable to getting damaged. For example they comprise measurement and control engineering and/or mechanical or electrical parts inside the sewer which may get damaged by the waste-water flowing through the sewer pipe. During normal use, the known sewer blockage detection systems may get contaminated or even blocked, for example by urinary stone getting deposited on them. Also the measurement and control engineering and/or mechanical or electrical parts may get damaged during an unblocking operation when a plumber's snake or other cleaning object gets forced through the sewer pipe.

The present invention aims to at least partly overcome those disadvantages or to provide a usable alternative. In particular the present invention aims to provide a user-friendly and reliable sewer blockage detection system which is relative cheap and simple.

This aim is obtained by an assembly of a sewer and a sewer blockage detection system according to claim 1. The sewer comprises a sewer pipe for having waste-water standing still inside or flowing through at least a bottom part thereof. The detection system comprises a gas supply for delivering pressurized gas to a gas transport duct. For this the gas transport duct connects with one end to the gas supply. From there the duct extends towards the sewer pipe, and there opens out with a gas inflow opening inside the bottom part of the sewer pipe. A measuring organ has been provided for measuring back pressures of pressurized gas when flowing from the gas supply through the duct into the bottom part. Further a control unit has been provided which comprises at least one threshold value for the measured back pressures, which threshold value is indicative for detecting blockages or risks for future blockages inside the sewer. The control unit is designed to send out an alarm signal when back pressures which have been measured over a certain period of time by the measuring organ keep on lying above the threshold value. According to the inventive thought the gas inflow opening has been provided in a lower circumferential wall section of the sewer pipe that delimits its bottom part. Thus the gas inflow opening has been provided inside a "wet" part of the sewer pipe wall, that is to say that lower section of the sewer pipe wall where during normal circumstances the waste-water is at least present by standing still or flowing alongside this lower wall section. Pressurized gas which is delivered to the duct, flows through the duct and gets blown directly through the inflow opening in the lower circumferential wall section into the bottom part of the sewer pipe. Advantageously no system elements like measurement and control engineering and/or mechanical or electrical parts of the sewer blockage detection system need to be provided inside the sewer pipe. In fact the entire measuring can take place outside the sewer. The system can be considered as self-cleaning. A (semi-) permanent flow of pressurized gas through the gas inflow opening keeps the system efficiently unblocked and prevents sediments like urinary stone to be able to deposit inside it. If it is deemed necessary to perform a cleaning operation of the inside of the sewer pipe, for example because a risk for future blockages has been detected, then it is not necessary to first have the sewer blockage detection system removed. The construction of the system is simple and cheap, while at the same time it can easily and quickly be installed at all kinds of places along the outside of a sewer pipe.

Thus a simple assembly has been obtained with which risks for blockages to occur in the near future inside a sewer pipe can be reliably predicted. This makes it possible to timely take appropriate precautionary measures in order to prevent a full blocking of the sewer which may lead to all kinds of other problems. Gas pressure differences which occur because of differences in water column pressure inside the sewer, can easily be measured by the system and used as indication for increased or decreased waste-water level. By setting a suitable threshold value in combination with a suitable time period, the system is capable of communicating whether for example merely a temporary increase of the waste-water level inside the sewer has taken place or that a more permanent increase of the waste-water level is taking place. If at some point in time a gas pressure is measured which lies above the threshold value, while subsequently after a time period x a gas pressure is measured which indicates that the waste-water level has decreased again to a normal level, then no alarm signal gets sent out, and one can assume that it was merely a peak load. Such a peak load can occur when a lot of people use the sewer at a same time, for example when visiting the rest room at the end of a common coffee or lunch break. If however at some point in time a gas pressure is measured which lies above the threshold value, while subsequently after a time period x still a gas pressure is measured which lies above said threshold value, then an alarm signal gets sent out, because then one can assume that a blockage is going to occur soon. The setting of a suitable threshold value can be dependent on a desired safety level in trying to detect/predict future blockages, and can even be made variable in time.

It is noted that US 3,638,490 and US 3,965,740 disclose fluid flow measuring devices which make use of introduction of pressurized gas into a stream of waste-water which flows through a sewer pipe. For this a rigid elongated tube has gotten positioned such into the sewer pipe that it gets to lie on the bottom thereof. This tube at one end is connected to a flexible hose. The hose in turn is connected to either a pressure vessel filled with pressurized air, or to a compressor. The opposite free end of the tube is provided with a gas outlet. During use pressurized gas is forced through the hose into the immersed rigid tube and out of its gas outlet into the waste-water. Measuring means are provided which are responsive to the force or pressure which is required to force the gas into the stream of waste-water. Back pressures which are measured are indicative for the depth and/or velocity of the stream of waste-water inside the sewer pipe. In contrast to the present invention those known gas-pressure operated level measurement systems are unable to detect blockages to occur in a sewer pipe. Their control unit does not comprises at least one threshold value for the measured back pressures that is indicative for detecting blockages or risks for future blockages inside the sewer and is not designed to send out an alarm signal when the measured back pressures over a period of time lie above such a threshold value. Further it is noted that their functioning leaves to be desired, and that they are particularly destined to be used for large sewer and water users. For example they need a large manhole opening for being able to properly get them positioned inside a sewer pipe. Also they form an obstacle inside the sewer pipe, behind which all kinds of objects and particles inside the waste-water may remain hanging, and thus start to form a blockage themselves. Further it is noted that the detection systems first need to be removed before it is possible to start a cleaning or unblocking operation of the sewer pipe. Furthermore it is disadvantageous that US 3,638,490 needs a weighted streamlining foot to keep the tube in its best possible operating position in the flow, whereas US 3,965,740 needs a compressible clamping collar for getting it clamped inside the sewer pipe. The foot and the clamp also may lead to all kinds of objects and particles inside the waste-water remain hanging behind them.

Further it is noted that from JP60250215 a level measuring device of a water discharge pipe is known which makes use of introduction of compressed air in the pipe together with making use of a detector for detecting back-pressure of the compressed air. This level measurement device also is unable to detect blockages to occur in the discharge pipe. Its control unit does not comprise at least one threshold value for the measured back pressures that is indicative for detecting blockages or risks for future blockages inside the sewer and is not designed to send out an alarm signal when the measured back pressures over a period of time lie above such a threshold value.

In a preferred embodiment according to the present invention a connection nipple has been mounted to an outer side of the lower circumferential wall section of the sewer pipe at the position of the gas inflow opening. The duct then can easily be connected to this nipple, preferably releasably. More importantly the entire duct and also the nipple can remain outside the sewer pipe and thus in no way are able to negatively influence the flow of waste-water through there.

In a further embodiment the gas inflow opening can be formed by a through hole that has been drilled in the lower circumferential wall section of the sewer pipe. This is a flexible and quick operation which can be performed at various desired locations alongside a sewer. The nipple advantageously can also be used as a guide for the drill during a drilling operation through the sewer pipe wall. Thus the drill does not have a tendency to slip away and the gas inflow opening can be accurately provided at exactly the aimed position cq height. It is then no longer necessary to drill in a radial direction relative to a mostly tubular sewer pipe wall. For example the gas inflow opening then can be drilled in a substantially horizontal direction through said lower circumferential wall section. This helps to give an installer sufficient manoeuvring space around the sewer pipe during installation.

In an even further embodiment a manifold can be used for connecting the duct to the sewer pipe. The manifold can be given a shape which is complementary to the outer side of the lower circumferential wall section of the sewer pipe around the position of the gas inflow opening. The connection between the manifold and the sewer pipe can be achieved in various ways, but advantageously the manifold gets adhered to the pipe by means of a suitable glue. Instead of using a manifold it is also possible to take out an entire part of the sewer pipe and have it replaced by a segment that already includes the gas inflow opening and/or nipple.

In a variant the duct is a flexible hose. This makes the system flexible to get installed at all kinds of places including underground.

The diameter of the duct and/or of the gas inflow opening can have all kinds of dimensions. Preferably it is smaller than 8 mm. In practice this has appeared to be a suitable upper range which makes it possible to use a gas supply with a relative low debit and output pressure.

The gas supply may comprise a pump, in particular an electric pump. The pump can be kept relative light. The output pressure of the pump may be variable and for example depend on the diameter of the sewer pipe. It is possible to have the system continuously blow in pressurized gas. Advantageously the pump is designed to suck in and deliver pressurized environmental air as pressurized gas to the duct. This is not only cheap and simple, but also does not pollute the waste-water or harm the environment.

Advantageously the control unit may connect to a monitoring device. This connection preferably is wireless, in particular via a modem function to the internet. The monitoring device then for example can be a computer screen that is connected to the internet, but also a screen of a smart phone or any other device/screen, to which a user can log into. Thus data and/or graphics can be shown to the user which show the changing waste-water levels inside the pipe. This may further help the user to properly predict risks for future blockages. Also it may help the user in better comprehending the normal use of the sewer including its peak loads over time.

In a further preferred embodiment the gas inflow opening and duct at an inner side of the lower circumferential wall section of the sewer pipe do not comprise any parts at all which project into the bottom part of the sewer pipe. The inner side of the sewer pipe thus can remain a smooth wall along which the waste-water can easily flow.

In an embodiment, the gas inflow opening has been provided in the lower circumferential wall section at a height of less than 2 cm of a bottom of the sewer pipe. On the one hand this maximum height provides sufficient space for being able to provide the gas inflow opening/duct/nipple to the sewer pipe from a sideways direction. On the other hand this maximum height is considered to lie well below a minimum level of the waste water inside the sewer pipe (the abovementioned bottom part of the sewer pipe). The height of the gas inflow opening may also be higher, for example when this is possible because of a certain fall/slope of the sewer pipe.

It is possible to provide only one gas inflow opening of which the gas inflow back pressure gets monitored. This gas inflow opening then preferably lies close to a position where the waste water enters the sewer pipe, that is to say as much upstream as possible. This is because this makes it possible to monitor a maximum length of downstream sewer pipe on possible future blockages. Moreover this upstream positioning of the gas inflow opening then also comes to lie closest to there where the most contamination is likely to build up. For example depositions of greases and the like in case of a sink connecting to the sewer pipe, and depositions of urinary stone and the like in cases of a toilet connecting to the sewer pipe. In the alternative it is also possible to provide for a plurality of gas inflow openings along a length of sewer pipe, which al get monitored for changes in gas inflow back pressures.

Further advantageous embodiments are stated in the subclaims.

The invention also relates to a method for operating the assembly.

The invention shall be explained in more detail below with reference to the accompanying drawings, in which:
- Fig. 1 shows a schematic view of an embodiment of the assembly of sewer pipe and sewer blockage detection system according to the invention;
- Fig. 2 shows a possible connection of the duct of fig. 1 to the sewer pipe; and
- Fig. 3 is a view of fig. 2 with an increased waste-water level.

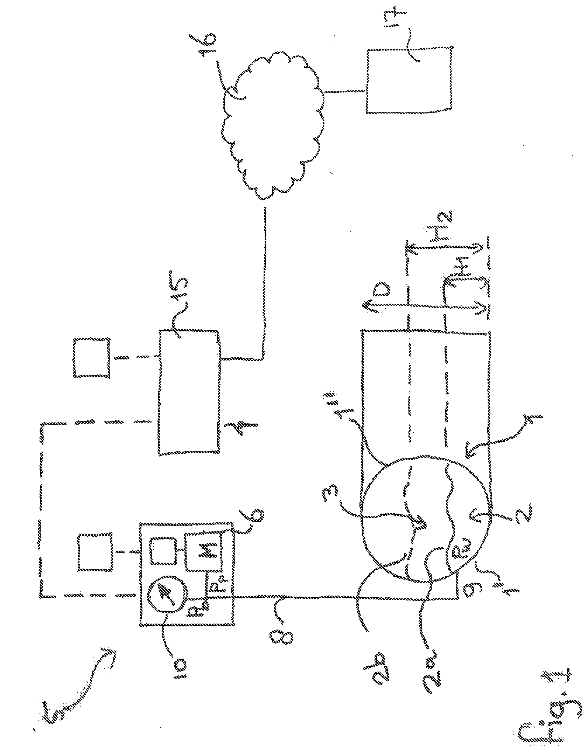

A sewer pipe in fig. 1 has been given the reference numeral 1. The sewer pipe 1 comprises a bottom part 2 which is delimited by a so-called lower circumferential wall section 1' of the pipe 1. An upper part 3 of the pipe 1 is delimited by a so-called upper circumferential wall section 1". During normal use the bottom part 2 remains filled with waste-water, whereas the upper part 3 remains filled with air. This minimum level of the waste-water has been indicated with a wave line 2a.

The pipe 1 has a cylindrical cross section with a diameter D of approximately 100 mm. The level 2a inside the bottom part 2 here has a height H1 of less than 20 mm.

When batches of additional waste-water get to flow through the pipe 1, the level of the waste-water inside the pipe 1 temporarily shall increase and not only fill up the bottom part 2 but also partly or wholly the upper part 3.

Should for some reason the level of the waste-water inside the pipe 1 after a certain time interval x not drop back to the minimum level 2a, but remain lying at or above a certain threshold waste-water level 2b inside the pipe 1, then this can be seen as an indication that the pipe 1 is already partly blocked and that a full blockage of the pipe 1 is likely to occur at short notice. The threshold level 2b inside the upper part 3 here has a height H2 which lies in between H1 and D. The height H2 of the threshold level 2b and the time interval x are to be determined by a user in dependence of the diameter of the sewer pipe 1 and a risk analysis for future sewer pipe blockages to occur in the sewer pipe 1.

Outside the sewer pipe 1 a detection system 5 is provided. The system 5 comprises an electric pump 6 which via an air inlet is able to take in air, pressurize this air and feed it into a gas transport duct 8. The duct 8 connects to a gas inflow opening 9 which is provided in the lower circumferential wall section 1'.

During use the pump 6 continuously feeds pressurized air into the duct 8. From there the pressurized air flows through the duct 8 and via the gas inflow opening 9 into the waste-water inside the pipe 1.

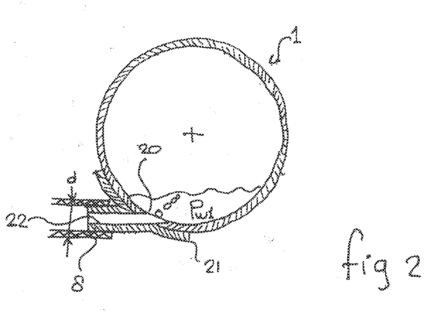

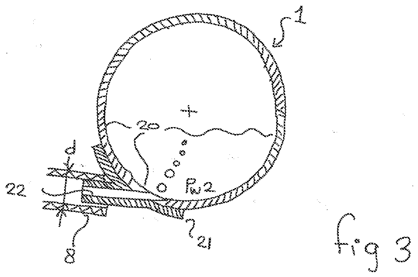

The system 5 comprises a pressure measuring organ 10 which is designed to continuously or intermittently measure so-called back pressures inside the duct 8. The measured back pressure Pb is dependent on the output pressure Pp of the pump and of the waste-water column pressure Pw which occurs at the position of the inflow opening 9 at the time the measurement takes place. The waste-water pressure Pw is dependent on the height of the level of the waste-water inside the pipe 1 at that time. Fig. 2 shows a situation with a waste-water level which is lower than in Fig. 3. Therefore there it goes that Pw1 < Pw2, and since Pp is kept the same, it follows that a back pressure Pb1 measured for the situation in fig. 2 shall be lower than a back pressure Pb2 measured for the situation in fig. 3.

The measured back pressures Pb over time are sent to a control unit 15. This control unit 15 is programmed with a threshold value with which the measured back pressures Pb can be compared. This threshold value is set to correspond to the determined threshold level 2b. Furthermore the control unit 15 is programmed with the time interval x.

If the control unit 15 detects that back pressures Pb have been measured which remain lying above the set threshold value over a period of time which is longer than the set time interval x, then an alarm signal is sent out to a user. This user then timely can take appropriate measures to prevent the sewer pipe 1 from further clogging/blocking, and for example perform a check if the pipe 1 needs to be cleaned and/or unblocked.

Even when an alarm signal has not been sent out, it is already possible for the user to check and monitor the functioning of the sewer pipe 1. For this the control unit 15 has a data connection preferably via the internet or intranet to a Cloud environment 16. A user can log into this Cloud environment 16 via a device 17 with a screen. On this screen the user can then be presented with data and/or graphics which show the measured back pressures against time. Thus the user can closely watch how the sewer is operating and if maintenance needs to be performed even well before an alarm signal is sent out.

In fig. 2 it is shown that the inflow opening 9 is formed by a hole 20 which has been drilled into the sewer pipe 1. A manifold 21 which is equipped with an outwardly projecting nipple 22 is glued to the pipe 1. The duct 8 which here is formed by a flexible hose with an inner diameter d is clamped around the nipple 22. The inner diameter d of the duct as well as the inner diameter of the inflow opening 20 have been chosen smaller than 8 mm. In this way the amount of gas which needs to be blown into the pipe 1 can be kept limited, while still being possible to perform suitable measurements of the back pressures.

Besides the embodiments shown numerous variants are possible. For example the dimensions and shapes of the various parts can differ. The duct can also be connected to the pipe in other manners, and instead of a pump it is also possible to use a vessel filled with pressurized gas. Instead of using a pressure measuring organ it is also possible to use other kinds of measuring organs, like for example performing a measurement to an axis of the pump and/or measuring the energy consumption of the pump. It is also possible to fill the control unit with more than one threshold value for the back pressure and/or time interval such that account can be taken for already known peak load moments.

Thus according to the invention an advantageous system and method are provided with which sewer pipes and maintenance thereof can be further optimized in a simple an effective manner which can easily be installed to already existing sewers.

## Claims

1. An assembly of a sewer and a sewer blockage detection system, comprising:
- a sewer pipe (1) for having waste-water flowing through at least a bottom part (2) thereof;
- a measuring organ (10); and
- a control unit (15),
in which the control unit (15) is designed to send out an alarm signal when a blockage is detected in the sewer pipe (1),
**characterized in that,**
the assembly further comprises:
- a gas supply for delivering pressurized gas;
- a gas transport duct (8) which connects with one end to the gas supply, which extends from there towards the sewer pipe (1), and then opens out inside the bottom part (2),
wherein the measuring organ (10) is designed for measuring back pressures (Bp) of pressurized gas when flowing from the gas supply through the duct (8) into the bottom part (2),
wherein the control unit (15) comprises at least one threshold value for the measured back pressures (Bp), which threshold value is indicative for detecting blockages or risks for future blockages inside the sewer,
wherein the control unit (15) is designed to send out the alarm signal when back pressures (Bp) which have been measured over a period of time by the measuring organ (10) lie above said threshold value,
wherein a gas inflow opening (9) has been provided in a lower circumferential wall section of the sewer pipe (1) that delimits its bottom part (2), and
wherein the duct (8) connects to the gas inflow opening (9) such that pressurized gas which is delivered to the duct (8), flows through the duct (8) and gets blown directly through the gas inflow opening (9) in said lower circumferential wall section into the bottom part (2) of the sewer pipe (1).

2. An assembly according to claim 1, wherein a connection nipple (22) has been mounted to an outer side of the lower circumferential wall section of the sewer pipe (1) at the position of the gas inflow opening (9), and wherein the duct (8) has been connected with its other end to the nipple (22).

3. An assembly according to one of the preceding claims, wherein the gas inflow opening (9) is formed by a hole drilled in the lower circumferential wall section of the sewer pipe (1).

4. An assembly according to one of the preceding claims, wherein a manifold (21) that is complementary to the sewer pipe (1) has been connected, in particular glued, to an outer side of the lower circumferential wall section of the sewer pipe (1) around the position of the gas inflow opening (9).

5. An assembly according to one of the preceding claims, wherein the duct (8) is a flexible hose.

6. An assembly according to one of the preceding claims, wherein the diameter of the duct (8) and/or the gas inflow opening (9) is smaller than 8 mm.

7. An assembly according to one of the preceding claims, wherein the gas supply comprises a pump (6), in particular an electric pump.

8. An assembly according to claim 7, wherein the pump (6) is designed to suck in and deliver pressurized environmental air as pressurized gas to the duct (8).

9. An assembly according to one of the preceding claims, wherein the control unit (15) connects to a monitoring device.

10. An assembly according to one of the preceding claims, wherein the gas inflow opening (9) at an inner side of the lower circumferential wall section of the sewer pipe (1) does not comprise parts which project into the bottom part (2) of the sewer pipe (1).

11. An assembly according to one of the preceding claims, wherein the gas inflow opening (9) has been provided in the lower circumferential wall section at a height of less than 2 cm of a bottom of the sewer pipe (1).

12. A method for operating the assembly according to one of the preceding claims, comprising the steps:
- have waste-water flow through at least the bottom part (2) of the sewer pipe (1);
- have pressurized gas delivered to the gas inflow opening (9) via the gas transport duct (8);
- have back pressures (Bp) of the pressurized gas measured when it flows from the gas supply through the duct (8) into the bottom part (2); and
- have the control unit (15) send out an alarm signal when the measured back pressures (Bp) over a set period of time lie above a set threshold value,
wherein the pressurized gas gets blown directly through the gas inflow opening (9) in said lower circumferential wall section into the bottom part (2) of the sewer pipe (1).

## Patentansprüche

1. Anordnung eines Abwasserkanals und eines Kanalblockierungs-Detektionssystems, umfassend:
- ein Abwasserrohr (1), um Abwasser wenigstens durch einen unteren Teil (2) davon zu führen;
- ein Messorgan (10); und
- eine Steuereinheit (15),
in der die Steuereinheit (15) dazu ausgelegt ist, ein Alarmsignal auszusenden, wenn eine Verstopfung in dem Abwasserrohr (1) festgestellt wird,
**dadurch gekennzeichnet,**
**dass** die Anordnung ferner umfasst:
- eine Gasversorgung zur Abgabe von Druckgas;
- eine Gastransportführung (8), die mit einem Ende mit der Gasversorgung in Verbindung steht, die sich von dort zum Abwasserrohr (1) erstreckt, und dann innerhalb des unteren Teils (2) mündet, wobei das Messorgan (10) zum Messen von Gegendrücken (Bp) von Druckgas beim Strömen von der Gaszufuhr durch die Führung (8) in den unteren Teil (2) ausgelegt ist,
wobei die Steuereinheit (15) mindestens einen Schwellenwert für die gemessenen Gegendrücke (Bp) umfasst, wobei dieser Schwellenwert indikativ für das Erkennen von Verstopfungen oder Risiken für zukünftige Verstopfungen innerhalb des Abwasserkanals ist,
wobei die Steuereinheit (15) so ausgelegt ist, dass sie das Alarmsignal aussendet, wenn Gegendrücke (Bp), die über einen Zeitraum durch das Messorgan (10) gemessen wurden, oberhalb des Schwellenwertes liegen,
wobei eine Gaseinströmöffnung (9) in einem seinen unteren Teil (2) begrenzenden unteren Umfangswandabschnitt des Abwasserrohrs (1) bereitgestellt wurde, und
wobei die Führung (8) so mit der Gaseinströmöffnung (9) in Verbindung steht, dass Druckgas, das der Führung (8) zugeführt wird, durch die Führung (8) strömt und direkt durch die Gaseinströmöffnung (9) in dem unteren Umfangswandabschnitt in den unteren Teil (2) des Abwasserrohrs (1) eingeblasen wird.

2. Anordnung nach Anspruch 1, wobei ein Verbindungsnippel (22) an einer äußeren Seite des unteren Umfangswandabschnitts des Abwasserrohrs (1) an der Position der Gaseinströmöffnung (9) angebracht ist, und wobei die Führung (8) mit ihrem anderen Ende mit dem Nippel (22) verbunden worden ist.

3. Anordnung nach einem der vorhergehenden Ansprüche, wobei die Gaseinströmöffnung (9) durch ein Loch gebildet ist, das in den unteren Umfangswandabschnitt des Abwasserrohrs (1) gebohrt ist.

4. Anordnung nach einem der vorhergehenden Ansprüche, wobei ein Anschlussstück (21), das zu dem Abwasserrohr (1) komplementär ist, mit einer äußeren Seite des unteren Umfangswandabschnitts des Abwasserrohrs (1) ringsum die Position der Gaseinströmöffnung (9) verbunden, insbesondere geklebt, ist.

5. Anordnung nach einem der vorhergehenden Ansprüche, wobei die Führung (8) ein flexibler Schlauch ist.

6. Anordnung nach einem der vorhergehenden Ansprüche, wobei der Durchmesser der Führung (8) und / oder der Gaseinströmöffnung (9) kleiner als 8 mm ist.

7. Anordnung nach einem der vorhergehenden Ansprüche, wobei die Gasversorgung eine Pumpe (6), insbesondere eine elektrische Pumpe, umfasst.

8. Anordnung nach Anspruch 7, wobei die Pumpe (6) dazu ausgelegt ist, Umgebungsluft einzusaugen und unter Druck stehende Umgebungsluft als Druckgas an den Kanal (8) abzugeben.

9. Anordnung nach einem der vorhergehenden Ansprüche, wobei die Steuereinheit (15) mit einer Überwachungseinrichtung in Verbindung steht.

10. Anordnung nach einem der vorhergehenden Ansprüche, wobei die Gaseinströmöffnung (9) an einer inneren Seite des unteren Umfangswandabschnitts des Abwasserrohrs (1) keine Teile umfasst, die in den unteren Teil (2) des Abwasserrohrs (1) hineinragen.

11. Anordnung nach einem der vorhergehenden Ansprüche, wobei die Gaseinströmöffnung (9) in dem unteren Umfangswandabschnitt in einer Höhe von weniger als 2 cm von einem Boden des Abwasserrohrs (1) bereitgestellt ist.

12. Verfahren zum Betreiben der Anordnung nach einem der vorhergehenden Ansprüche, umfassend die Schritte:
- Strömenlassen von Abwasser mindestens durch den unteren Teil (2) des Abwasserrohrs (1);
- Zuführen von Druckgas über die Gastransportführung (8) zu der Gaseinströmöffnung (9);
- Messen von Gegendrücken (Bp) des Druckgases, wenn es von der Gasversorgung durch die Führung (8) in den unteren Teil (2) strömt; und
- Aussenden eines Alarmsignals durch die Steuereinheit (15), wenn die gemessenen Gegendrücke (Bp) über einen festgelegten Zeitraum oberhalb eines festgelegten Schwellenwertes liegen,
wobei das Druckgas direkt durch die Gaseinströmöffnung (9) in dem unteren Umfangswandabschnitt in den unteren Teil (2) des Abwasserrohrs (1) eingeblasen wird.

## Revendications

1. Assemblage d'un égout et d'un système de détection de blocage d'égout, comprenant :
- une canalisation d'égout (1) permettant l'écoulement d'eaux usées à travers au moins une partie inférieure (2) de celle-ci ;
- un organe de mesure (10) ; et
- une unité de commande (15),
dans lequel l'unité de commande (15) est conçue pour émettre un signal d'alarme lorsqu'un blocage est détecté dans la canalisation d'égout (1),
**caractérisé en ce que**
l'assemblage comprend en outre :
- une alimentation en gaz pour une alimentation en gaz pressurisé ;
- une conduite de transport de gaz (8) qui se relie avec une extrémité de l'alimentation en gaz, qui s'étend de là en direction de la canalisation d'égout (1) puis s'ouvre vers l'intérieur de la partie inférieure (2),
l'organe de mesure (10) étant conçu pour la mesure de pressions arrière (Bp) du gaz pressurisé lorsqu'il s'écoule de l'alimentation en gaz à travers la conduite (8) vers la partie inférieure (2),
l'unité de commande (15) comprenant au moins une valeur seuil pour les pressions arrière (Bp) mesurées, cette valeur seuil indiquant la détection de blocage ou de risques de futurs blocages à l'intérieur de l'égout,
l'unité de commande (15) étant conçue pour émettre un signal d'alarme lorsque des pressions arrière (Bp) qui ont été mesurées pendant une période par l'organe de mesure (10) se trouvent au-dessus de ladite valeur seuil,
une ouverture d'entrée de gaz (9) ayant été réalisée dans une section de paroi circonférentielle inférieure de la canalisation d'égout (1) qui délimite sa partie inférieure (2) et
la conduite (8) se reliant à l'ouverture d'entrée de gaz (9) de façon à ce que le gaz pressurisé qui est introduit dans la conduite (8) s'écoule à travers la conduite (8) et soit soufflé directement à travers l'ouverture d'entrée de gaz (9) dans ladite section de paroi circonférentielle inférieure vers la partie inférieure (2) de la canalisation d'égout (1).

2. Assemblage selon la revendication 1, dans lequel un téton de connexion (22) a été monté sur un côté extérieur de la section de paroi circonférentielle inférieure de la canalisation d'égout (1) au niveau de la position de l'ouverture d'entrée de gaz (9) et dans lequel la conduite (8) a été connectée, avec son autre extrémité, au téton (22).

3. Assemblage selon l'une des revendications précédentes, dans lequel l'ouverture d'entrée de gaz (9) est constituée d'un trou percé dans la section de paroi circonférentielle inférieure de la canalisation d'égout (1).

4. Assemblage selon l'une des revendications précédentes, dans lequel un collecteur (21), qui est complémentaire de la canalisation d'égout (1), a été connecté, plus particulièrement collé, à un côté extérieur de la section de paroi circonférentielle inférieure de la canalisation d'égout (1) autour de la position de l'ouverture d'entrée de gaz (9).

5. Assemblage selon l'une des revendications précédentes, dans lequel la conduite (8) est un tuyau flexible.

6. Assemblage selon l'une des revendications précédentes, dans lequel le diamètre de la conduite (8) et/ou l'ouverture d'entrée de gaz (9) est inférieur à 8 mm.

7. Assemblage selon l'une des revendications précédentes, dans lequel l'alimentation en gaz comprend une pompe (6), plus particulièrement une pompe électrique.

8. Assemblage selon la revendication 7, dans lequel la pompe (6) est conçue pour aspirer et introduire un air environnemental pressurisé en tant que gaz pressurisé dans la conduite (8).

9. Assemblage selon l'une des revendications précédentes, dans lequel l'unité de commande (15) se relie à un dispositif de surveillance.

10. Assemblage selon l'une des revendications précédentes, dans lequel l'ouverture d'entrée de gaz (9), sur un côté intérieur de la section de paroi circonférentielle inférieure de la canalisation d'égout (1), ne comprend pas des parties qui dépassent dans la partie inférieure (2) de la canalisation d'égout (1).

11. Assemblage selon l'une des revendications précédentes, dans lequel l'ouverture d'entrée de gaz (9) a été disposée dans section de paroi circonférentielle inférieure à une hauteur inférieure à 2 cm d'un fond de la canalisation d'égout (1).

12. Procédé d'exploitation de l'assemblage selon l'une des revendications précédentes, comprenant les étapes suivantes :
- écoulement des eaux usées à travers au moins la partie inférieure (2) de la canalisation d'égout (1) ;
- introduction de gaz pressurisé dans l'ouverture d'entrée de gaz (9) via la conduite de transport de gaz (8) ;
- mesure des pressions arrière (Bp) du gaz pressurisé lorsqu'il s'écoule de l'alimentation de gaz) à travers la conduite (8) dans la partie inférieure (2) ; et
- émission par l'unité de commande (15) d'un signal d'alarme lorsque les pressions arrière (Bp) mesurées sur une période déterminée se trouvent au-dessus d'une valeur seuil déterminée,
le gaz pressurisé étant soufflé directement à travers l'ouverture d'entrée de gaz (9) dans ladite section de paroi circonférentielle inférieure vers la partie inférieure (2) de la canalisation d'égout (1).
